# EUROPÄISCHE PATENTANMELDUNG

(11) **EP 2 020 469 A2**
(43) Veröffentlichungstag der Anmeldung: **04.02.2009**
(21) Anmeldenummer: 08013297.0
(22) Anmeldetag: 24.07.2008
(51) Int. Cl.: E04F 13/08, F16B 13/12, F16B 13/00

(54) **Dübel zur Befestigung von plattenförmigen Elementen aus einem schaumstoffartigen nachgiebigen Material**

(30) Priorität: 30.07.2007 DE 102007035953; 28.09.2007 DE 202007013670 U
(71) Anmelder: Flörchinger, Ludwig, 67304 Eisenberg (DE)
(72) Erfinder: Flörchinger, Ludwig, 67304 Eisenberg (DE)
(74) Vertreter: Kesselhut, Wolf

(57) **Zusammenfassung**

Die Erfindung betrifft einen Dübel zur Befestigung von plattenförmigen Elementen (2) aus einem schaumstoffartigen nachgiebigen Material an einer Wand (4), umfassend einen hülsenförmigen Grundkörper (6) und eine in diesem aufgenommene Schraube (8), wobei dem Grundkörper (6) ein erster Befestigungsabschnitt (10) zugeordnet ist, mittels welchem dieser in einem Bohrloch (26) der Wand (4) fixierbar ist, und wobei der hülsenförmige Grundkörper (6) einen nacheinander angeordneten zweiten und dritten Abschnitt (12, 14) umfasst, wobei der zweite Abschnitt (12) eigensteifist und unter Bildung eines Absatzes (18) einen gegenüber dem ersten Befestigungsabschnitt (10) radial vergrößerten Außendurchmesser besitzt, und dass im dritten Abschnitt (14) zur Bildung von Spreizarmen (38) Schlitze (22) geformt sind, die sich in Richtung des bohrlochfernen Ende des Grundkörpers (6) erstrecken, derart, dass der Grundkörper (6) im dritten Abschnitt (14) durch eine auf diesen beim Anziehen der Schraube (8) wirkende Druckkraft aufspreizbar ist.

## Beschreibung

Die Erfindung betrifft einen Haltedübel zur Fixierung von plattenförmigen Elementen, die aus einem schaumstoffartigen nachgiebigen Material bestehen, an der Außenfläche einer Wand nach dem Oberbegriff des Anspruchs 1.

Aus dem Stand der Technik ist es bekannt, Plattenelemente aus einem nachgiebigen Material - beispielsweise aus einem Hartschaum wie Styropor oder aus einem Dämmstoff wie Mineral- oder Steinwolle - mit einer Gebäudewand zu verkleben. Infolge des Nachlassens der Adhäsionskräfte des Klebemittels durch Alterung oder Wärmeeinwirkung besteht hierbei die Gefahr, dass die Klebeverbindung nicht dauerhaft besteht und sich das Plattenelement nach einiger Zeit von der Wand löst.

In diesem Zusammenhang werden zur zusätzlichen konstruktiven Befestigung von Dämmelementen an einer Gebäudewand Tellerdübel verwendet, welche sich durch das Dämmelement hindurch erstrecken und in der Gebäudewand verankert sind. An dem freien Ende des Tellerdübels ist ein tellerförmiger Kopf vorgesehen, der auf die Dämmplatte eine Druckkraft ausübt und diese somit an der Gebäudewand fixiert. Nach dem Aufbringen einer Putzschicht auf die Oberfläche des Dämmelementes, welcher der Gebäudewand abgewandt ist, zeichnet sich der tellerförmige Kopf durch die Putzschicht hindurch ab und bleibt sichtbar. Weiterhin stellt der durch das Dämmelement hindurch verlaufende Tellerdübel eine Wärmebrücke dar, die eine Bildung von Kondensat an der Gebäudewand und damit eine Schimmelbildung zur Folge haben kann.

Demgemäß ist es eine Aufgabe der Erfindung, einen Dübel bereitzustellen, der eine dauerhafte Verbindung zwischen einem plattenförmigen Element aus einem schaumstoffartigen nachgiebigen Material und einer Wand herstellt und dabei die Bildung einer Wärmebrücke verhindert.

Diese Aufgabe wird erfindungsgemäß durch die Merkmale des Anspruches 1 gelöst.

Weitere Merkmale der Erfindung sind in den Unteransprüchen enthalten.

Zur Lösung der Aufgabe der Erfindung umfasst der Dübel einen Grundkörper, in dem eine Schraube aufgenommen ist. Dem Grundkörper ist hierbei ein erster Befestigungsabschnitt zugeordnet, mit dem der Grundkörper in einem Bohrloch der Wand fixierbar ist. Gemäß der Erfindung weist der Grundkörper eine Hülsenform auf und umfasst einen zweiten und einen dritten Abschnitt, die hintereinander angeordnet sind. Die Schraube wird dabei durch den hülsenförmigen Grundkörper hindurch geführt. Gegenüber dem ersten Befestigungsabschnitt weist der Grundkörper im zweiten Abschnitt einen in radialer Richtung vergrößerten Außendurchmesser auf, so dass zwischen dem ersten Befestigungsabschnitt und dem zweiten Abschnitt ein Absatz entsteht. In dem dritten Abschnitt, der sich an den zweiten Abschnitt anschließt, sind in der Wand des hülsenförmigen Grundkörpers Schlitze geformt. Beim Anziehen der Schraube überträgt diese eine Druckkraft auf den Grundkörper im dritten Abschnitt, so dass sich der Grundkörper in radialer Richtung aufspreizt. Die zwischen den Schlitzen angeordneten Wandabschnitte des Grundkörpers dienen hierbei als Spreizarme. Die im dritten Abschnitt im Grundkörper eingebrachten Schlitze erstrecken sich vorzugsweise bis zum bohrlochfernen Ende des Grundkörpers. Um eine Verformung und damit eine Verminderung der auf den Grundkörper im dritten Abschnitt wirkenden Druckkraft zu verhindern, ist der Grundkörper im zweiten Abschnitt eigensteif und formstabil gegenüber einer in axialer Richtung des Grundkörpers einwirkenden Druckkraft.

Zur Befestigung des Dübels an einer Wand wird der erste Befestigungsabschnitt in einem Bohrloch der Wand fixiert, wobei sich der Grundkörper mit dem Absatz, der sich zwischen dem ersten Befestigungsabschnitt und dem zweiten Abschnitt befindet, an der Wand abstützt. Aufgrund des Absatzes erstreckt sich der Grundkörper mit der Länge des zweiten und dritten Abschnittes von der Wandoberfläche nach außen. Der zweite Abschnitt hat dabei die Funktion eines Abstandshalters zwischen der Wandoberfläche und dem aufspreizbaren dritten Abschnitt.

Bei der Verwendung eines erfindungsgemäßen Dübels zur Befestigung von plattenförmigen Elementen an einer Wand weisen der zweite und der dritte Abschnitt des Dübels eine geringere Länge auf als das plattenförmige Element dick ist. Hierdurch ist der zweite und dritte Abschnitt des Dübels innerhalb des plattenförmigen Elementes angeordnet. Beim Anziehen der Schraube dreht sich diese in das Bohrloch der Wand hinein, wobei der am bohrlochfernen Ende der Schraube angeordnete Schraubenkopf eine Druckkraft auf den Grundkörper im dritten Abschnitt ausübt. Hierdurch wird der Grundkörper im dritten Abschnitt aufgespreizt. Die zwischen den Schlitzen angeordneten Wandabschnitte des Grundkörpers werden hierbei in radialer Richtung nach Außen in das Material des plattenförmigen Elementes bewegt. Durch die Vergrößerung des Außendurchmessers des Grundkörpers im dritten Abschnitt wird das plattenförmige Element an der Wand fixiert, wobei der dritte Abschnitt nach dem Aufspreizen als tellerförmiges Formschlusselement dient.

Die Öffnung im plattenförmigen Element, durch die der erfindungsgemäße Dübel hindurch gesteckt und in die Wand eingebracht wird, kann nach der Befestigung des plattenförmigen Elementes bis zum aufgespreizten dritten Abschnitt des Dübels mit dem selben Material verschlossen werden, aus dem auch das plattenförmige Element besteht. Hierdurch ist der Dübel in dem plattenförmigen Element integriert, von außen nicht sichtbar und ist zudem auch für verschiedene Dicken von plattenförmigen Elementen verwendbar. Bei einer Befestigung von Dämmelementen an einer Gebäudewand mit einem erfindungsgemäßen Dübel wird zudem eine konstruktive Wärmebrücke im Bereich der Dübelbefestigung weitestgehend vermieden.

Nach einer erfindungsgemäßen Ausführungsform des Dübels kann es vorgesehen sein, dass dem dritten Abschnitt des Grundkörpers ein Schirmelement aus flexiblem Material zugeordnet ist. Das Schirmelement ummantelt den dritten Abschnitt im aufgespreizten Zustand zumindest abschnittsweise und schließt dabei die Zwischenräume zwischen den Spreizarmen, welche sich beim Aufspreizen bilden. Hierdurch wird im dritten Abschnitt des Dübels die Fläche vergrößert, welche während und nach dem Aufspreizen eine Druckkraft auf das plattenförmige Element ausübt. Gleichzeitig mit der Vergrößerung der Kontaktfläche erhöht sich auch die Druckkraft, welche durch das Aufspreizen des dritten Abschnittes auf das plattenförmige Element übertragen werden kann. Auf diese Weise wird eine schnelle und sichere Befestigung des plattenförmigen Elementes an einer Wand mit einfachen mechanischen Mitteln ermöglicht.

Um die Reibung zwischen dem Schirmelement und dem Material des plattenförmigen Elementes beim Aufspreizen des dritten Abschnittes zu verringern, weist das Schirmelement vorzugsweise eine glatte Oberfläche auf Weiterhin ergibt sich hierdurch der Vorteil, dass zum Einbringen des Dübels in das plattenförmige Element nur eine geringe Druckkraft erforderlich ist.

Gemäß der Erfindung kann der Außendurchmesser des Schirmelementes im aufgespreizten Zustand des dritten Abschnittes einen Außendurchmesser zwischen 50 mm und 70 mm aufweisen. Die Haltekräfte des Dübels bzw. die Kräfte, die zum Ausziehen des erfindungsgemäßen Dübels aus einem plattenförmigen Element aufzubringen sind, werden hierdurch in der Art vergrößert, dass der Dübel auch bei Wärmedämmverbundsystemen zur Befestigung von Dämmstoffplatten an Fassaden zu verwenden ist.

Gemäß einer weiteren Ausführungsform der Erfindung kann es vorgesehen sein, dass der Grundkörper zwischen dem zweiten und dem dritten Abschnitt eine Einkerbung aufweist, in welcher der Grundkörper einen in radialer Richtung verringerten Außendurchmesser besitzt. Beim Aufspreizen des Grundkörpers im dritten Abschnitt befinden sich die Biegeachsen der zwischen den Schlitzen angeordneten Wandabschnitte des Grundkörpers aufgrund der Materialschwächung im Bereich der Einkerbung. Hierbei ist die Länge dieser Spreizarme durch die Länge der Schlitze und die Position der Einkerbung festgelegt. Durch die geringere Wandstärke des Grundkörpers im Bereich der Einkerbung und die damit verbundene verminderte Biegefestigkeit des Materials des Grundkörpers muss durch die Schraube nur eine geringe Druckkraft für das Aufspreizen des Grundkörpers erzeugt werden, so dass beim Anziehen der Schraube dementsprechend nur ein geringes Drehmoment erforderlich ist.

Zur Befestigung des Schirmelementes im Bereich der Einkerbung kann es gemäß der Erfindung vorgesehen sein, dass das Schirmelement aus einem elastischen Material besteht und eine Ausnehmung aufweist, deren Durchmesser in etwa dem Durchmesser der Einkerbung im Grundkörper entspricht. Zur Montage wird die Ausnehmung des Schirmelementes durch Dehnen des Materials vergrößert und der Grundkörper des Haltedübels durch die Ausnehmung des Schirmelementes hindurch geführt. Aufgrund der elastischen Materialeigenschaften und der auf den Durchmesser der Einkerbung angepassten Größe der Ausnehmung ist das Schirmelement auf einfache Weise im Bereich der Einkerbung zu befestigen.

Nach einer weiteren Ausführungsform der Erfindung können im dritten Abschnitt auf der äußeren Mantelfläche des Grundkörpers Widerhaken vorgesehen sein, die sich in Richtung des zweiten Abschnittes erstrecken. Beim Aufspreizen des dritten Abschnitts des Grundkörpers greifen die Widerhaken in das schaumstoffartige nachgiebige Material des plattenförmigen Elementes ein und vergrößern somit dessen Oberfläche, die für eine formschlüssige Verbindung zwischen dem aufgespreizten dritten Abschnitt und dem Material des plattenförmigen Elementes wirksam ist. Auf diese Weise ergibt sich eine sichere Verankerung der aufgespreizten Spreizarme im plattenförmigen Element.

Erfindungsgemäß kann der Grundkörper im zweiten Abschnitt ein Innengewinde aufweisen, in welches die Schraube mit ihrem Außengewinde eingreift. Hierdurch ergibt sich der Vorteil, dass die Schraube vor einer Fixierung des ersten Befestigungsabschnittes in der Wand gegen ein Herausfallen aus dem Grundkörper gesichert ist. Weiterhin ist das Aufspreizen des Grundkörpers im dritten Abschnitt nicht davon abhängig, ob sich die Schraube im ersten Befestigungsabschnitt in die Wand eindreht. Das Aufspreizen des Grundkörpers im dritten Abschnitt kann somit gleichzeitig mit der Fixierung des Dübels im Bohrloch der Wand erfolgen, wodurch eine schnelle Montage des erfindungsgemäßen Dübels ermöglicht wird.

Für eine einfache Kombination von Grundkörper und Schraube bei der Herstellung des erfindungsgemäßen Dübels kann es vorgesehen sein, dass sich das Innengewinde ausgehend von dem Ende des ersten Befestigungsabschnittes über einen Teilbereich der Länge des zweiten Abschnittes hinweg erstreckt. Die Schraube muss beim Zusammensetzen mit dem Grundkörper nur wenige Umdrehungen in das Innengewinde eingedreht werden, ohne dass das bohrlochferne Ende der Schraube mit einer großen Länge über den dritten Abschnitt des Grundkörpers hinweg steht. Weiterhin sind hierdurch auch Schrauben verwendbar, die kein über die Schraubenlänge durchgängiges Außengewinde aufweisen.

Gemäß einer weiteren Ausführungsform der Erfindung kann der erste Befestigungsabschnitt des Dübels von dem freien Ende der Schraube gebildet sein, welches aus dem hülsenförmigen Grundkörper am bohrlochnahen Ende des zweiten Abschnitts hervor steht. Der Grundkörper erstreckt sich dabei lediglich über den zweiten und dritten Abschnitt des Dübels. Hierdurch wird ein Dübel bereitgestellt, der zur Befestigung von plattenförmigen Elementen an einer Wand aus Holz oder einem ähnlichen Material, in das sich das Außengewinde der Schraube einschneidet, geeignet ist.

Nach einer anderen Ausführungsform kann der Grundkörper auch den ersten Befestigungsabschnitt mit umfassen. Der Grundkörper ist dabei im ersten Befestigungsabschnitt als Spreizdübel ausgebildet, der beim Anziehen der Schraube aufgespreizt wird. Hierdurch ist der Dübel auch für die Befestigung von plattenförmigen Elementen an Wänden aus Kalksandstein, Hohlloch-Ziegeln, Porenbeton, Bims-Hohlblocksteinen oder anderen Baustoffen einsetzbar, in denen das Gewinde der Schraube nicht direkt eindrehbar ist. Zum Einsatz eines solchen Dübels sind vorgebohrte Löcher in der Wand erforderlich, wobei die Fixierung des ersten Befestigungsabschnitts in dem Bohrloch über Form- und/oder Reibschluss erfolgen kann. Um eine Verdrehung des ersten Befestigungsabschnittes im Bohrloch zu verhindern, kann der Grundkörper im ersten Befestigungsabschnitt Verdrehsicherungen aufweisen, wie sie von aus dem Stand der Technik bekannten Spreizdübeln her bekannt sind.

Selbstverständlich ist es auch möglich, den ersten Befestigungsabschnitt mittels Stoffschluss, beispielsweise durch eine Verklebung mit Mörtel oder Kunstharz, zusätzlich in der Wand zu fixieren.

Bei der zuvor beschriebenen Ausführungsform umfasst der Grundkörper den ersten Befestigungsabschnitt, den zweiten Abschnitt sowie den dritten Abschnitt. Nach einer anderen erfindungsgemäßen Ausgestaltung des Dübels kann es zudem vorgesehen sein, dass ein Dübelkörper sich über den ersten Befestigungsabschnitt hinweg erstreckt und an seinem bohrlochfernen Ende abschnittsweise vom zweiten Abschnitt des Grundkörpers umschlossen wird. Bei dem Dübelkörper kann es sich dabei um einen Spreiz-, Hohlraum-, Universal- oder Gipskartondübel handeln. Hierdurch ergibt sich die Möglichkeit, den Grundkörper mit verschiedenen Arten von Dübelkörpern zu kombinieren, so dass der Dübelkörper auf den Baustoff der Wand nachträglich abgestimmt werden kann. Der Dübelkörper und der Grundkörper können hierbei lose, beispielsweise mittels einer Steckverbindung, verbunden sein. Durch die Kombination von verschiedenen Dübelkörpern mit dem Grundkörper ergibt sich eine Vielzahl von Einsatzmöglichkeiten des erfindungsgemäßen Dübels.

Gemäß einer weiteren Ausführungsform der Erfindung ist der erste Befestigungsabschnitt drehfest mit dem zweiten Abschnitt verbunden. Beim Anziehen der Schraube wird auf diese Weise eine relative Verdrehung zwischen dem zweiten Abschnitt und dem ersten Befestigungsabschnitt, der entweder als Spreizdübel ausgebildet oder Teil eines Dübelkörpers ist, ausgeschlossen. Beim Aufspreizen des Grundkörpers im dritten Abschnitt wird dabei ein Verdrehen der Spreizarme im Material des plattenförmigen Elements und damit ein Aushöhlen des plattenförmigen Elementes im Bereich des Dübels verhindert.

Um einen erfindungsgemäßen Dübel mit einem als Spreizdübel ausgebildeten ersten Befestigungsabschnitt bzw. mit einem im Bereich des ersten Befestigungsabschnittes angeordneten Dübelkörper auch für Wände aus Baustoffen zu verwenden, in welche das Außengewinde der Schraube sich selbst einschneidet, kann es vorgesehen sein, dass der erste Befestigungsabschnitt vom zweiten und dritten Abschnitt des Grundkörpers lösbar ist. Hierdurch ist es möglich, einen Dübel sowohl für Stein- als auch für Holzwände einzusetzen, wobei bei einer Wand aus Holz der erste Befestigungsabschnitt des Dübels lediglich vom Grundkörper abgeschnitten oder abgetrennt werden muss.

Bei der Ausführung des ersten Befestigungsabschnitts als Spreizdübel oder als Teil eines Dübelkörpers kann es erfindungsgemäß weiterhin vorgesehen sein, dass sich das Innengewinde im Grundkörper vom zweiten Abschnitt bis in den ersten Abschnitt hinein erstreckt, wodurch die im Grundkörper aufgenommene Schraube durch den verlängerten Gewindegang zusätzlich geführt wird.

Gemäß der Erfindung kann die Schraube am bohrlochfernen Ende einen Schraubenkopf aufweisen, dessen Durchmesser größer als der Außendurchmesser des Grundkörpers im dritten Abschnitt ist. Zum Aufspreizen des Grundkörpers im dritten Abschnitt muss der Schraubenkopf somit nicht erst in den Hohlraum des Grundkörpers eingezogen werden, sondern übt die Druckkraft auf den dritten Abschnitt bereits dann aus, sobald der Schraubenkopf am bohrlochfernen Ende des dritten Abschnittes des Grundkörpers anliegt. Erfindungsgemäß kann der Schraubenkopf hierbei eine Konusform aufweisen, die das Aufspreizen des Grundkörpers im dritten Abschnitt unterstützt und die zwischen den Schlitzen angeordneten Spreizarme des Grundkörpers im dritten Abschnitt an dem Schraubenkopf vorbei führt.

Gleichermaßen kann es darüber hinaus ebenfalls vorgesehen sein, dass der Grundkörper im dritten Abschnitt eine konkave konusförmige Öffnung aufweist, in die der Schraubenkopf beim Anziehen einführbar ist. Durch den konusförmigen Schraubenkopf und/oder die konusförmige Öffnung des Grundkörpers im dritten Abschnitt werden die Spreizarme beim Anziehen der Schraube über den Schraubenkopf geführt, wobei nur eine geringe Kraft zum Anziehen der Schraube erforderlich ist.

Das Prinzip der Erfindung wird nachfolgend mit Bezug auf die Zeichnungen beispielshalber noch weiter beschrieben.

In den Zeichnungen zeigen:
- Figur 1: einen erfindungsgemäßen Dübel umfassend eine Schraube, einen Grundkörper mit einem Schirmelement und einen als Spreizdübel ausgebildeten ersten Befestigungsschnitt,
- Figur 2: einen Schnitt durch einen erfindungsgemäßen Dübel vor der Befestigung eines plattenförmigen Elementes an einer Wand, sowie
- Figur 3: einen Schnitt durch den in Figur 2 dargestellten Dübel mit einem aufgespreizten Grundkörper mit Schirmelement.

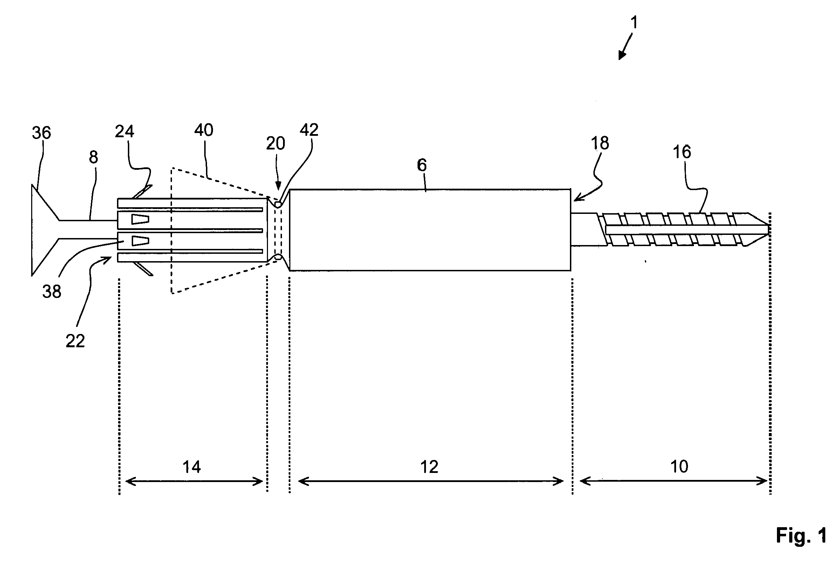

Figur 1 zeigt einen erfindungsgemäßen Dübel, der einen Grundkörper 6 und eine darin aufgenommene Schraube 8 umfasst. Der Dübel 1 ist hierbei in einen ersten Befestigungsabschnitt 10, einen zweiten Abschnitt 12 sowie einen dritten Abschnitt 14 unterteilt, wobei die Abschnitte 10, 12 und 14 in axialer Richtung des Dübels hintereinander angeordnet sind und dem dritten Abschnitt 14 ein Schirmelement 40 zugeordnet ist.

Im ersten Befestigungsabschnitt 10 ist der Grundkörper 6 als Spreizdübel 16 ausgeführt, wobei auf der Oberfläche des Grundkörpers 6 im ersten Befestigungsabschnitt 10 eine in Figur 1 nicht dargestellte, jedoch aus dem Stand der Technik bekannte Verdrehsicherung angeordnet sein kann, die ein Verdrehen des ersten Befestigungsabschnittes 10 in einem Bohrloch einer Wand verhindert.

An den ersten Befestigungsabschnitt 10 schließt in axialer Richtung des Dübels 1 der zweite und dritte Abschnitt 12, 14 an, in welchen der Grundkörper 6 eine Hülsenform, insbesondere eine zylindrische Hülsenform aufweist. Der Außendurchmesser des Grundkörpers 6 im zweiten Abschnitt 12 ist dabei größer als der Außendurchmesser des Grundkörpers 6 im ersten Befestigungsabschnitt 10. Hieraus ergibt sich zwischen dem ersten Befestigungsabschnitt 10 und dem zweiten Abschnitt 12 ein Absatz 18.

Zwischen dem zweiten Abschnitt 12 und dem dritten Abschnitt 14 ist im Grundkörper 6 eine umlaufende Einkerbung 20 vorgesehen, bei welcher der Grundkörper 6 vorzugsweise eine geringere Wandstärke aufweist als in den angrenzenden Abschnitten 12, 14. In dem sich an die Einkerbung 20 anschließenden dritten Abschnitt 14 sind Schlitze 22 im Grundkörper 6 vorgesehen, die sich zur Bildung von Spreizarmen 38 in axialer Richtung vom bohrlochfernen Ende des Grundkörpers 6 bis hin zur Einkerbung 20 erstrecken. Selbstverständlich können die Schlitze 22 auch eine andere als die in Figur 1 gezeigte Form und einen anderen Verlauf aufweisen. Weiterhin sind auf der Oberfläche des Grundkörpers 6 im dritten Abschnitt 14 Widerhaken 24 angeordnet, die in Richtung des zweiten Abschnitts 12 gerichtet sind und die äußere Oberfläche der Spreizarme 38 des Grundkörpers 6 im dritten Abschnitt 14 vergrößern.

Neben den Widerhaken 24 ist im Bereich des dritten Abschnittes 14 weiterhin ein Schirmelement 40 angeordnet, das aus darstellungstechnischen Gründen in Figur 1 nur durch eine gestrichelte Linie angedeutet ist. Das Schirmelement 40 besteht aus einem elastischen und flexiblen Material mit einer glatten Oberfläche und erstreckt sich ausgehend von der Einkerbung 20 in der Form eines Kegelstumpfes wenigstens abschnittsweise über den dritten Abschnitt 14 des Dübels 1 hinweg.

Vor der Befestigung am Grundkörper 6 weist das Schirmelement 40 vorzugsweise eine Kreisform und eine im Wesentlichen zentrisch angeordnete Ausnehmung 42 auf Zur Montage des Schirmelementes 40 am Grundkörper 6 wird die Ausnehmung 42 des Schirmelementes 40 durch Dehnen des Materials vergrößert und anschließend ausgehend vom Ende des ersten Abschnitts 10 oder vom Ende des dritten Abschnitts 14 über den Grundkörper 6 bis zur Einkerbung 20 geschoben. Die Größe des Durchmessers der Ausnehmung 42 entspricht im entlasteten Zustand des Schirmelements 40 hierbei im Wesentlichen dem kleinsten Durchmesser des Grundköpers 6 im Bereich der Einkerbung 20, so dass das Schirmelement 40 aufgrund dessen elastischen Materialeigenschaften im Bereich der Einkerbung 20 unverschieblich befestigt ist. Zusätzlich zum Verklemmen des Schirmelementes 40 im Bereich der Einkerbung 20 kann dieses auch mit dem Grundkörper 6 verklebt sein. Alternativ zur Befestigung des Schirmelementes 40 in der Einkerbung ist es jedoch auch denkbar, dass das Schirmelement 40 lediglich mit den Spreizarmen 38 verklebt ist.

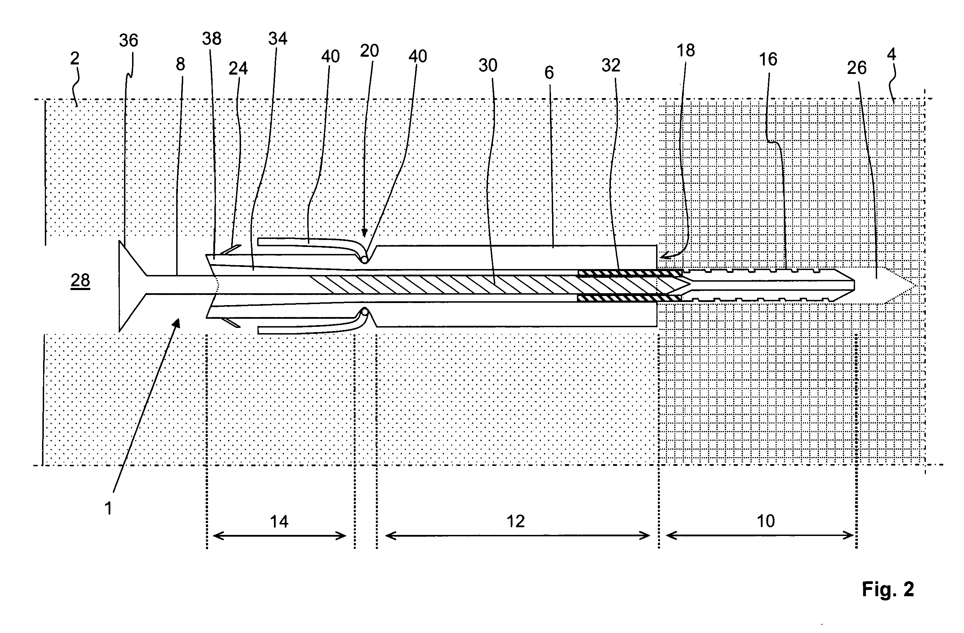

Die in dem hülsenförmigen Grundkörper 6 aufgenommene Schraube 8 ist von einer im dritten Abschnitt 14 im Grundkörper 6 angeordneten Öffnung aus in diesen einführbar. Wie Figur 2 zeigt, wird der erfindungsgemäße Dübel 1 bei der Befestigung eines plattenförmigen Elementes 2 an einer Wand 4 durch das plattenförmige Element 2 hindurch gesteckt und mit seinem ersten Befestigungsabschnitt 10 in ein in der Wand 4 vorgesehenes Bohrloch 26 eingeführt. Das Bohrloch 26 nimmt dabei den ersten Befestigungsabschnitt 10 des Dübels 1 komplett auf, wobei sich der Dübel 1 mit dem Absatz 18 an der Oberfläche der Wand 4 abstützt. Bei dem plattenförmigen Element 2 kann es sich beispielsweise um ein Dämmelement aus Hartschaum, Weichschaum, Styropor, Mineralwolle, Steinwolle oder einer Holzweichfaser handeln. Zum Einführen des Dübels 1 in das Bohrloch 26 ist in dem plattenförmigen Element 2 eine Öffnung 28 vorgesehen, die sich vorzugsweise koaxial zum Bohrloch 26 durch das plattenförmige Element 2 hindurch erstreckt.

Um beim Einschieben des Dübels 1 in die Öffnung 28 ein Verhaken der Widerhaken 24 an dem Material des plattenförmigen Elementes 2 zu verhindern, weist der Grundkörper 6 im zweiten Abschnitt 12 einen Außendurchmesser auf, der mindestens so groß ist wie der Außendurchmesser des in Figur 1 und Figur 2 gezeigten Grundkörpers 6 mit den im dritten Abschnitt 14 angeordneten Widerhaken 24. Insbesondere bei Spreizarmen 24 mit einer geringen Biegesteifigkeit kann der zweite Abschnitt 12 nach einer in den Figuren 1, 2 und 3 nicht dargestellten Ausführungsform jedoch auch einen Außendurchmesser aufweisen, der im Wesentlichen dem Außendurchmesser des dritten Abschnittes 14 ohne Widerhaken 24 entspricht.

Das Schirmelement 40, das nach der Darstellung in Figur 2 im Bereich der Einkerbung 20 unverschieblich befestigt ist, verformt sich beim Einschieben in die Öffnung 28 eines plattenförmigen Elementes 2 derart, dass der um den dritten Abschnitt 14 umlaufende flächenhafte Abschnitt des Schirmelementes 40 sich an den Seitenwänden der Öffnung 28 anlegt.

Die in dem Grundkörper 6 aufgenommene Schraube 8 greift mit ihrem Außengewinde 30 in ein im Grundkörper 6 angeordnetes Innengewinde 32 ein. Das Innengewinde 32 des Grundkörpers 6 erstreckt sich dabei von einem am Ende des Grundkörpers 6 im ersten Befestigungsabschnitt 10 angeordneten Abschnitt über einen Teilbereich der Länge des Grundkörpers 6 im zweiten Abschnitt 12. Um ein Herausrutschen der Schraube 8 aus dem Grundkörper 6 vorzubeugen, muss die Schraube 8 nach dem Einstecken in den Hohlraum 34 des Grundkörpers 6 wenige Umdrehungen in das im Grundkörper 6 angeordnete Innengewinde 32 eingeschraubt werden. Der Schraubenkopf 36, der an dem Bohrloch 26 abgewandten Ende der Schraube 8 angeordnet ist, ist konisch geformt und weist einen Außendurchmesser auf, der größer ist als der Außendurchmesser des Grundkörpers 6 ohne die im dritten Abschnitt 14 angeordneten Widerhaken 24. Weiterhin ist der dritte Abschnitt 14 des hülsenförmigen Grundkörpers 6 an seinem dem Bohrloch 26 abgewandten Ende konisch geöffnet, so dass der konisch geformte Schraubenkopf 38 der Schraube 8 abschnittsweise in den Grundkörper 6 einführbar ist.

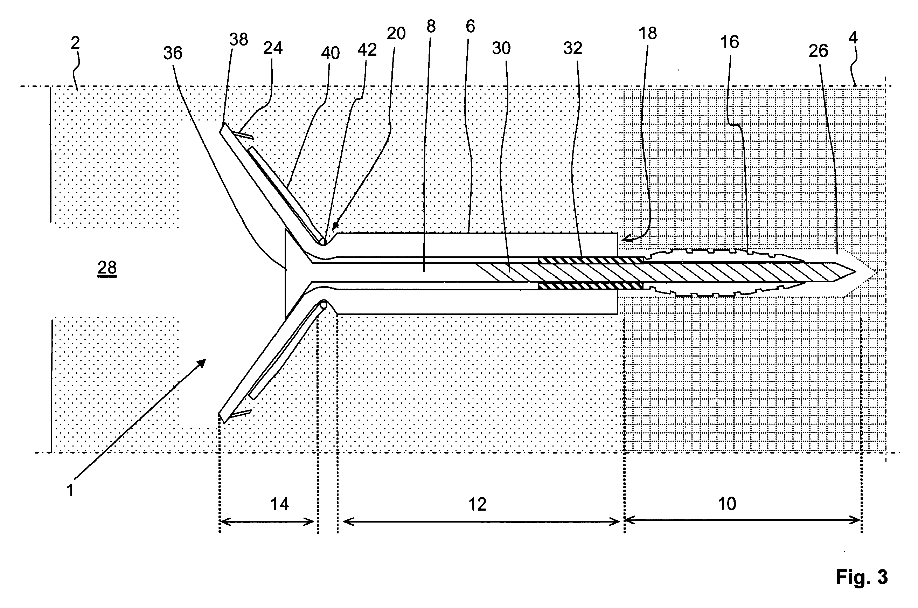

Zum Befestigen des plattenförmigen Elementes 2 an der Wand 4 wird die Schraube 8 in das Gewinde 32 des Grundkörpers 6 weiter eingedreht. Figur 3 zeigt in diesem Zusammenhang einen erfindungsgemäßen Dübel 1 mit einem aufgespreizten dritten Abschnitt 14 und einem in der Wand 4 fixierten ersten Befestigungsabschnitt 10. Wie aus der Darstellung in Figur 3 hervor geht, wird beim Anziehen der Schraube 8 sowohl der als Spreizdübel 16 ausgebildete erste Befestigungsabschnitt 10 als auch der dritte Abschnitt 14 des Grundkörpers 6 aufgespreizt. Hierbei drückt der konisch geformten Schraubenkopf 36 die durch die Schlitze 22 getrennten Spreizarme 38 des Grundkörpers 6 im dritten Abschnitt 14 derart auseinander, so dass die Spreizarme 38 das Schirmelement 40 gegen das Material des plattenförmigen Elementes 2 drücken und dieses komprimieren, wodurch das plattenförmige Element 2 mit einer formschlüssigen Dübelverbindung an der Wand 4 befestigt wird. Das Schirmelement 40 schließt hierbei wenigstens abschnittsweise die Zwischenräume zwischen den Spreizarmen 38, die beim Aufspreizen des dritten Abschnittes 14 entstehen. Somit vergrößert das Schirmelement 40 die Kontaktfläche des Dübels 1, welche das plattenförmige Element 2 gegen die Wand 4 drückt und daran befestigt. Für eine sichere und haltbare Befestigung des plattenförmigen Elementes 2 an der Wand 4 weist das Schirmelement 40 bei einem durch die Schraube 8 aufgespreizten dritten Abschnitt 14 einen Außendurchmesser in einer Größe zwischen 50 mm und 70 mm auf

Die Widerhaken 24, die außerhalb des von dem Schirmelement 40 umschlossenen Bereich an den Spreizarmen 38 angeordnet sind, greifen beim Anziehen der Schraube 8 und Aufspreizen des dritten Abschnittes 14 in das Material des plattenförmigen Elementes 2 ein und verankern die Spreizarme 38 im plattenförmigen Element 2. Die Länge der Widerhaken 24 ist hierbei größer als die Dicke des Schirmelementes 40, so dass diese über das Schirmelement 40 nach außen hinweg stehen. Die Einkerbung 20 gibt die Lage der Biegeachsen der Spreizarme 38 vor, so dass die in radialer Richtung um die Schraube 8 herum angeordneten Spreizarme 38 jeweils die gleiche Länge aufweisen und beim Aufspreizen ein im Wesentlichen kreisförmiger Spreizstern entsteht. Hierbei ist die Länge der Schraube 8 auf die Gesamtlänge des Grundkörpers 6 abgestimmt, so dass ein gleichzeitiges Fixieren des ersten Befestigungsabschnittes 10 in der Wand und ein Aufspreizen des dritten Abschnittes 14 des Grundkörpers 6 möglich ist. Um ein weitestgehend widerstandsfreies Eindrehen der Schraube 8 in den Grundkörper 6 zu gewährleisten, weist das Bohrloch 26 eine Tiefe auf, die größer als die Länge des Grundkörpers 6 im ersten Befestigungsabschnitt 10 ist.

Der in der Figur 1, Figur 2 und Figur 3 gezeigte Dübel 1 ist auch für Wände 2 aus Baustoffen geeignet, in denen sich das Außengewinde der Schraube 8 von selbst einschneiden kann. Hierzu ist der erste Befestigungsabschnitt 10 des Grundkörpers 6 vom zweiten und dritten Abschnitt 12, 14 des Grundkörpers 6 abtrennbar.

Die Längen der Schraube 8 und des Grundkörpers 6 sind auf die Dicke des plattenförmigen Elementes 2 in der Art abgestimmt, dass der Dübel 1 nicht aus dem plattenförmigen Element 2 hervorsteht. Die Dicke des plattenförmigen Elementes 2 ist dabei um ein Vielfaches größer als die Länge Grundkörpers 6 im zweiten und dritten Abschnitt 12, 14. Somit wird der Dübel 1 bei dessen Montage vollkommen vom plattenförmigen Element 2 umschlossen und ist nach einer Befestigung des plattenförmigen Elementes 2 an der Wand 4 von außen nicht sichtbar. Zum Verschließen der Öffnung 28 im plattenförmigen Element 2 kann es vorgesehen sein, dass die nicht von dem Dübel 1 ausgefüllte Öffnung 28 im plattenförmigen Element 2 mit dem gleichen Material ausgefüllt wird, aus dem auch das plattenförmige Element 2 selbst besteht. Insbesondere bei einer Befestigung von Dämmelementen an einer Wand werden hierdurch konstruktive Wärmebrücken ausgeschlossen.

### BEZUGSZEICHENLISTE

- 1: Dübel
- 2: plattenförmiges Element
- 4: Wand
- 6: Grundkörper
- 8: Schraube
- 10: erster Befestigungsabschnitt
- 12: zweiter Abschnitt
- 14: dritter Abschnitt
- 16: Spreizdübel
- 18: Absatz
- 20: Einkerbung
- 22: Schlitze
- 24: Widerhaken
- 26: Bohrloch
- 28: Öffnung
- 30: Außengewinde
- 32: Innengewinde
- 34: Hohlraum
- 36: Schraubenkopf
- 38: Spreizarm
- 40: Schirmelement
- 42: Ausnehmung

## Patentansprüche

1. Dübel zur Befestigung von plattenförmigen Elementen (2) aus einem schaumstoffartigen nachgiebigen Material an einer Wand (4), umfassend einen hülsenförmigen Grundkörper (6) und eine in diesem aufgenommene Schraube (8), wobei dem Grundkörper (6) ein erster Befestigungsabschnitt (10) zugeordnet ist, mittels welchem dieser in einem Bohrloch (26) der Wand (4) fixierbar ist,
**dadurch gekennzeichnet,**
**dass** der hülsenförmige Grundkörper (6) einen nacheinander angeordneten zweiten und dritten Abschnitt (12, 14) umfasst, wobei der zweite Abschnitt (12) eigensteif ist und unter Bildung eines Absatzes (18) einen gegenüber dem ersten Befestigungsabschnitt (10) radial vergrößerten Außendurchmesser besitzt, und dass im dritten Abschnitt (14) zur Bildung von Spreizarmen (38) Schlitze (22) geformt sind, die sich in Richtung des bohrlochfernen Ende des Grundkörpers (6) erstrecken, derart, dass der Grundkörper (6) im dritten Abschnitt (14) durch eine auf diesen beim Anziehen der Schraube (8) wirkende Druckkraft aufspreizbar ist.

2. Dübel nach Anspruch 1,
**dadurch gekennzeichnet,**
**dass** dem dritten Abschnitt (14) des Grundkörpers (6) ein Schirmelement (40) aus flexiblem Material zugeordnet ist, das den dritten Abschnitt (14) nach dem Aufspreizen zumindest abschnittsweise umschließt und im dritten Abschnitt (14) die Kontaktfläche des Dübels (1) mit dem plattenförmigen Element (2) vergrößert.

3. Dübel nach Anspruch 1 oder 2,
**dadurch gekennzeichnet,**
**dass** das Schirmelement (40) nach dem Aufspreizen des dritten Abschnittes (14) einen Außendurchmesser in einer Größe von 50 bis 70 mm aufweist.

4. Dübel nach einem der vorhergehenden Ansprüche,
**dadurch gekennzeichnet,**
**dass** der Grundkörper (6) zwischen dem zweiten und dritten Abschnitt (12, 14) eine in radialer Richtung verlaufende Einkerbung (20) aufweist.

5. Dübel nach Anspruch 4,
**dadurch gekennzeichnet,**
**dass** das Schirmelement (40) aus einem elastischem Material besteht und zur Befestigung im Bereich der Einkerbung (20) eine Ausnehmung (42) aufweist, deren Durchmesser in etwa dem Durchmesser des Grundkörpers (6) im Bereich der Einkerbung (20) entspricht.

6. Dübel nach einem der vorhergehenden Ansprüche,
**dadurch gekennzeichnet,**
**dass** im dritten Abschnitt (14) Widerhaken (24) auf der äußeren Mantelfläche des Grundkörpers (6) angeordnet sind, die in Richtung des zweiten Abschnittes (12) weisen.

7. Dübel nach einem der vorhergehenden Ansprüche,
**dadurch gekennzeichnet,**
**dass** der Grundkörper (6) im zweiten Abschnitt (12) ein Innengewinde (32) aufweist, in welches die Schraube (8) mit ihrem Außengewinde (30) eingreift.

8. Dübel nach Anspruch 7,
**dadurch gekennzeichnet,**
**dass** sich das Innengewinde (32) ausgehend vom Ende des ersten Befestigungsabschnittes (10) über einen Teilbereich der Länge des zweiten Abschnittes (12) hinweg erstreckt.

9. Dübel nach einem der Ansprüche 1 bis 7,
**dadurch gekennzeichnet,**
**dass** der erste Befestigungsabschnitt (10) des Dübels (1) von der durch den Grundkörper (6) hindurch verlaufenden Schraube (8) gebildet wird.

10. Dübel nach einem der vorhergehenden Ansprüche 1 bis 8,
**dadurch gekennzeichnet,**
**dass** der Grundkörper (6) den ersten Befestigungsabschnitt (10) umfasst, wobei dieser als Spreizdübel (16) ausgebildet und durch das Anziehen der Schraube (8) aufspreizbar ist.

11. Dübel nach einem der vorhergehenden Ansprüche 1 bis 8,
**dadurch gekennzeichnet,**
**dass** ein Dübelkörper vorgesehen ist, der sich über den ersten Befestigungsabschnitt (10) hinweg erstreckt und an seinem bohrlochfernen Ende abschnittsweise vom zweiten Abschnitt (12) des Grundkörpers (6) umschlossen wird.

12. Dübel nach Anspruch 10 oder 11,
**dadurch gekennzeichnet,**
**dass** der erste Befestigungsabschnitt (10) drehfest mit dem zweiten Abschnitt (12) verbunden ist.

13. Dübel nach Anspruch 10, 11 oder 12,
**dadurch gekennzeichnet,**
**dass** der erste Befestigungsabschnitt (10) vom zweiten und dritten Abschnitt (12, 14) des Grundkörpers (6) trennbar ist.

14. Dübel nach einem der vorhergehenden Ansprüche,
**dadurch gekennzeichnet,**
**dass** am bohrlochfernen Ende der Schraube (8) ein Schraubenkopf (36) vorgesehen ist, dessen Durchmesser größer als der Außendurchmesser des Grundkörpers (6) im dritten Abschnitt (14) ist.

15. Dübel nach einem der vorhergehenden Ansprüche,
**dadurch gekennzeichnet,**
**dass** der Grundkörper (6) am bohrlochfernen Ende des dritten Abschnitts (14) eine konusförmige Öffnung aufweist.
